# EUROPEAN PATENT APPLICATION

(11) **EP 4 729 305 A1**
(43) Date of publication of application: **22.04.2026**
(21) Application number: 24943539.7
(22) Date of filing: 14.06.2024
(51) Int. Cl.: B60B 19/02, F16H 1/32

(54) **STAIR-CLIMBING WHEEL**

(71) Applicant: CoBotSystem Co., Ltd, Anyang-si, Gyeonggi-do 14093 (KR); Kun, Jong-Hyun, Seoul 08846 (KR)
(72) Inventor: KUN, Jong-Hyun, Seoul 08846 (KR)
(74) Representative: WSL Patentanwälte Partnerschaft mbB
(86) International application number: PCT/KR2024/008209
(87) International publication number: WO 2025/258724

(57) **Abstract**

Disclosed is a stair-climbing wheel configured such that, when the wheel encounters an obstacle during movement, rotation of an outer wheel is stopped, an inner wheel is rotated by driving force of a motor, and, as a motor shaft is lifted onto the obstacle, tensile force of a spring pulls the wheel upward, thereby allowing the wheel to easily climb the obstacle. The stair-climbing wheel is applicable to wheels of mobility devices such as wheelchairs, strollers, and carts, thereby enabling users to easily climb obstacles such as curbs and stairs.

## Description

### [Technical Field]

The present invention relates to a stair-climbing wheel and, more particularly, to a stair-climbing wheel configured such that, when the wheel encounters an obstacle during movement, rotation of an outer wheel is stopped, an inner wheel is rotated by driving force of a motor, and, as a motor shaft is lifted onto the obstacle, tensile force of a spring pulls the wheel upward, thereby allowing the wheel to easily climb the obstacle.

### [Background Art]

In modern society, wheels are widely used as indispensable components and are applied to a variety of devices for convenience in daily life, such as wheelchairs, strollers, carts, and robots.

In general, a wheel includes an internal tube disposed therein to adjust elasticity of an outer portion of the wheel using air pressure. In contrast, in the case of a small-diameter wheel, an outer circumferential portion of the wheel is formed of a material such as urethane or rubber.

A movement method using wheels is efficient and relatively fast. In addition, because a contact area with a ground surface is large, stable travel is achieved.

When wheels roll on a ground surface or a road surface, the wheels are directly affected by a shape of the ground surface.

However, a general circular wheel is very efficient for traveling on flat ground, but has difficulty in climbing obstacles having a height difference, such as curbs and stairs, or in passing over various obstacles.

When persons with disabilities attempt to climb obstacles having a height difference, such as curbs and stairs, using a wheelchair, it is difficult for the persons with disabilities to easily climb the obstacles by their own effort, and movement requires assistance from others or significant effort, resulting in inconvenience in daily life and restrictions on mobility.

### [Disclosure]

### [Technical Problem]

The present invention has been made to solve the above problems, and it is an object of the present invention to provide a stair-climbing wheel configured such that, when the wheel encounters an obstacle during movement, rotation of an outer wheel is stopped, an inner wheel is rotated by driving force of a motor, and, as a motor shaft is lifted onto the obstacle, tensile force of a spring pulls the wheel upward, thereby allowing the wheel to easily climb the obstacle.

### [Technical Solution]

A stair-climbing wheel according to an embodiment of the present invention for accomplishing above object includes
an outer wheel configured to move in contact with a ground surface,
an inner wheel coupled to an inner side of the outer wheel so as not to be separated from the outer wheel, the inner wheel being configured to allow a motor providing driving force for rotating the wheel to be connected to a lower portion of the inner wheel and configured to lift a rotating shaft of the motor onto an obstacle when the outer wheel encounters the obstacle and rotation of the outer wheel is stopped,
wherein, during movement on flat ground, the outer wheel is rotated by rotational force of the motor while the inner wheel is held stationary, and when the outer wheel encounters the obstacle, rotation of the outer wheel is stopped, and the rotating shaft of the motor is lifted onto the obstacle as the inner wheel is rotated by the rotating shaft of the motor, and
a spring member connected to the inner wheel and to one side of the motor, the spring member being configured to maintain an integral state of the inner wheel and the outer wheel at a predetermined angle during movement on flat ground and to apply tensile force to pull the inner wheel upward when rotation of the outer wheel is stopped by the obstacle and the rotating shaft of the motor is lifted onto the obstacle by rotation of the inner wheel.

### [Advantageous Effects]

Due to the above-described configuration, the present invention is applicable to wheels of mobility devices such as wheelchairs, strollers, and carts, thereby enabling users to easily climb obstacles such as curbs and stairs.

### [Description of Drawings]

FIG. 1 is a view showing the configuration of a stair-climbing wheel according to an embodiment of the present invention.
FIGs. 2 and 3 are perspective views showing an exploded state of the stair-climbing wheel according to the embodiment of the present invention.
FIGs. 4 to 10 are views showing an exploded state, a cross-section, and some components of the stair-climbing wheel according to the embodiment of the present invention.
FIGs. 11 to 17 are views showing an operation state of the stair-climbing wheel according to the embodiment of the present invention.

### [Best Mode]

Throughout the specification, when a part is referred to as "comprising" or "including" a constituent element, it is to be understood that it may further include other constituent elements, not excluding other constituent elements unless otherwise specifically indicated.

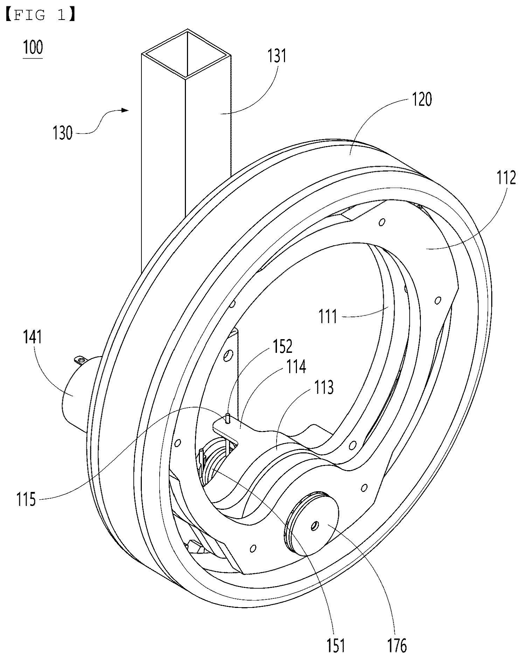

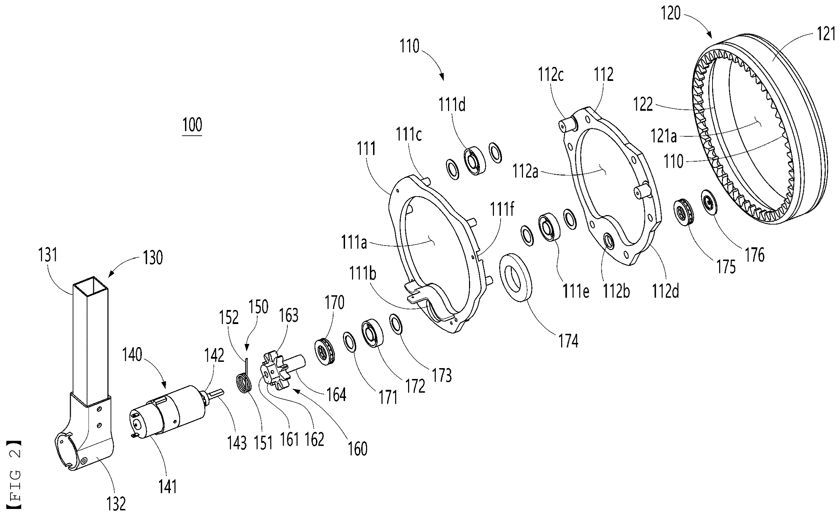

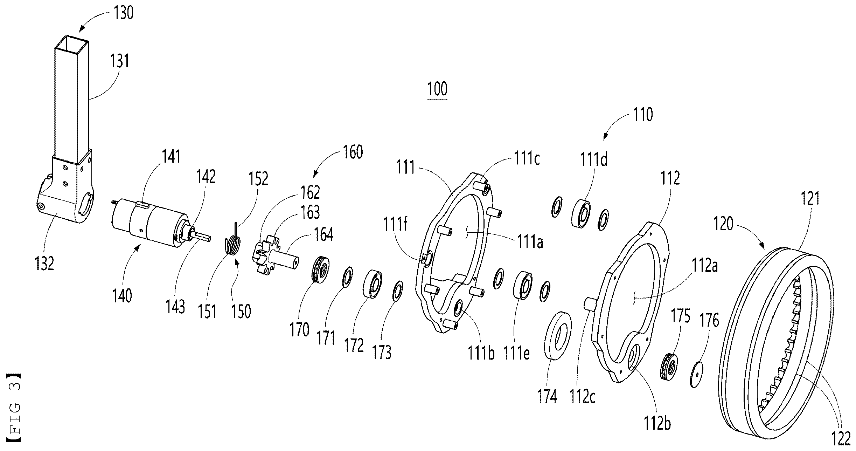

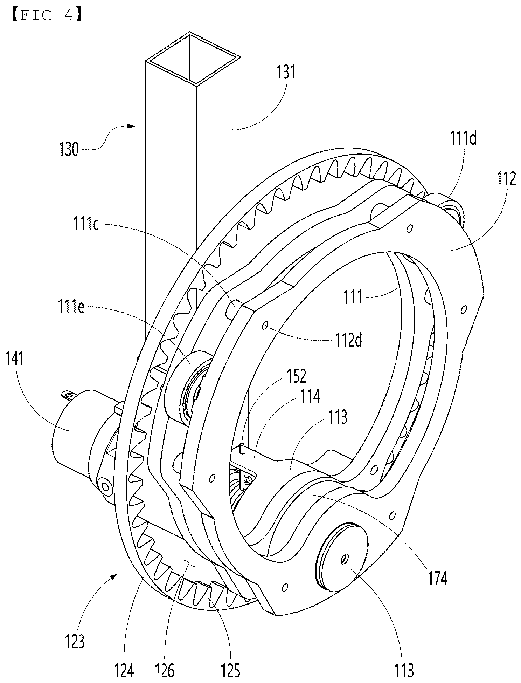

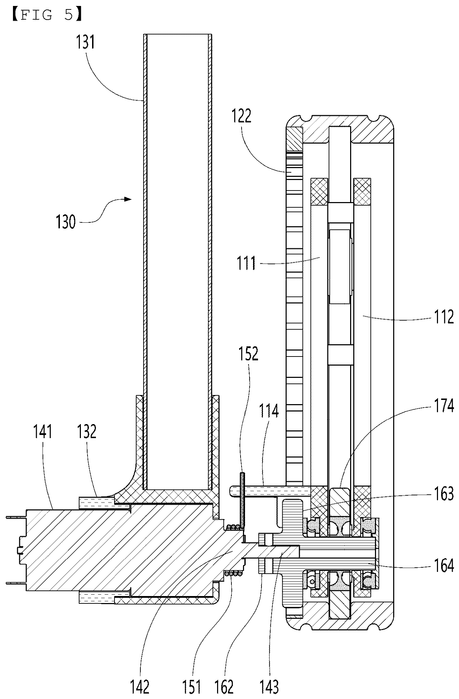

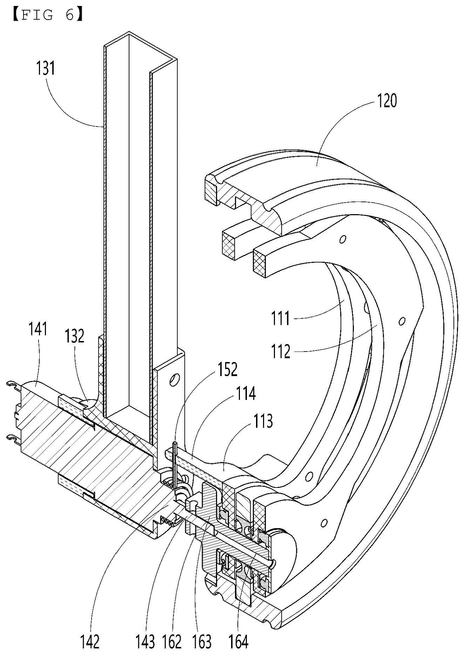

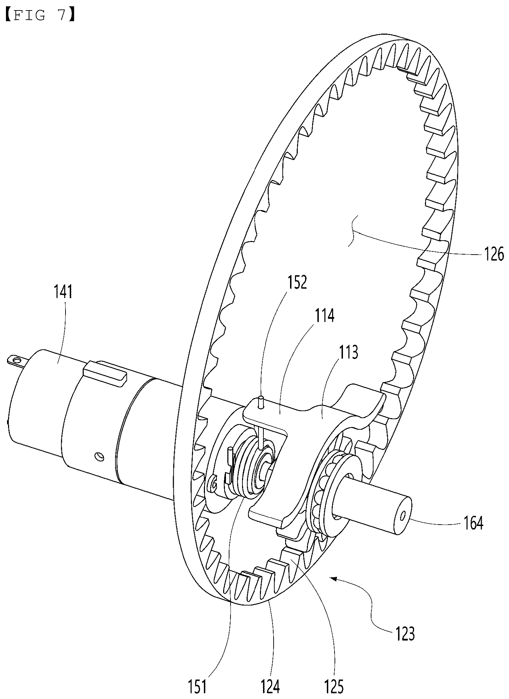

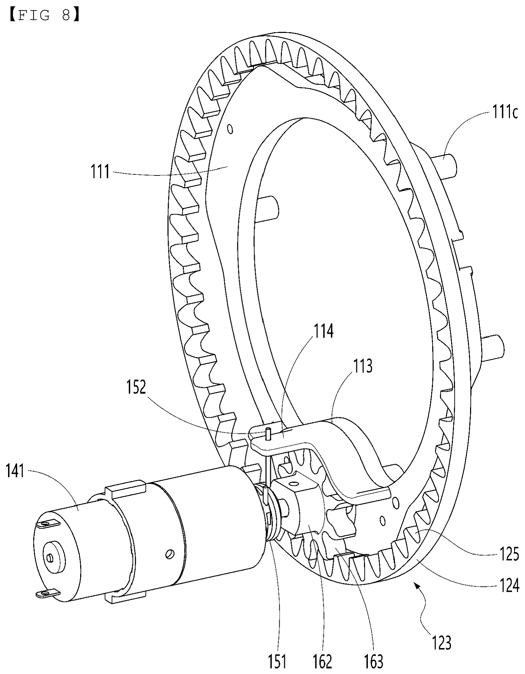

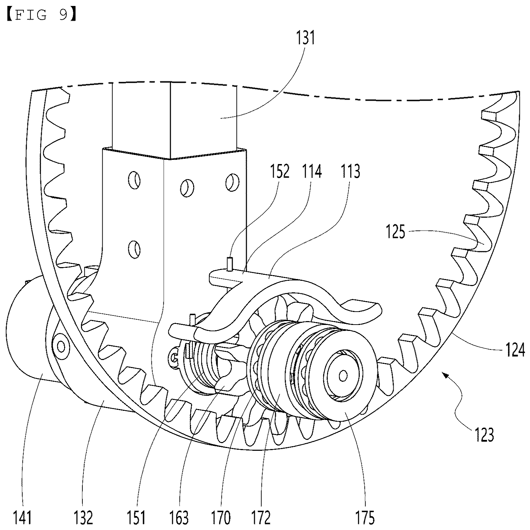

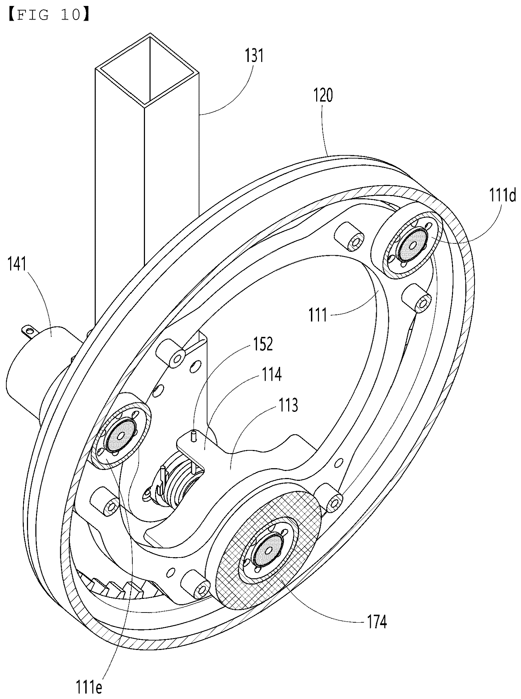

FIG. 1 is a view showing the configuration of a stair-climbing wheel according to an embodiment of the present invention, FIGs. 2 and 3 are perspective views showing an exploded state of the stair-climbing wheel according to the embodiment of the present invention, and FIGs. 4 to 10 are views showing an exploded state, a cross-section, and some components of the stair-climbing wheel according to the embodiment of the present invention.

The stair-climbing wheel 100 according to the embodiment of the present invention includes an inner wheel 110, an outer wheel 120, a motor member 140 fixed to a frame 130 to rotate the inner wheel 110, and a spring member 150 formed between the inner wheel 110 and the frame 130.

The stair-climbing wheel 100 includes the outer wheel 120 and the inner wheel 110 coupled to an inner side of the outer wheel 120 so as to rotate along an inner circumferential surface of the outer wheel 120 without being separated from the outer wheel 120.

The inner wheel 110 is manufactured as a hollow body having a circular ring shape and is formed of a material including, but not limited to, stainless steel or a high-strength aluminum alloy. The inner wheel 110 may be formed of a metal having excellent physical and mechanical properties such as durability and strength, and the hollow body has a generally circular cross-section.

The outer wheel 120 is manufactured as a hollow body having a circular ring shape and is formed of a material including, but not limited to, plastic, rubber, or a synthetic resin. The outer wheel 120 may be formed of a synthetic resin having excellent physical and mechanical properties such as durability and strength, and the hollow body has a generally circular cross-section.

The outer wheel 120 is configured to freely move in contact with a ground surface.

The outer wheel 120 includes a first wheel body 121 having a ring shape in which a first hollow portion 121a is defined and one or more rotation grooves 122 formed at predetermined intervals in an inner circumferential surface of the first wheel body 121.

The inner wheel 110 includes first and second inner wheels 111 and 112 having a ring shape in which second hollow portions 111a and 112a are defined. The circular first inner wheel 111 and the circular second inner wheel 112 are combined to form a single circular wheel structure.

The first inner wheel 111 and the second inner wheel 112 are inserted into and rotated in the one or more rotation grooves 122.

The first inner wheel 111 having a ring shape includes a first hollow portion 111a defined at a central portion thereof, a first through-hole 111b formed through a central portion of a lower end thereof, and a plurality of first coupling rods 111c arranged along and protruding from a rim surface thereof.

A first upper bearing 111d and a second upper bearing 111e are fitted on the first coupling rods 111c formed at an upper portion of the first inner wheel 111, and a lower bearing 174 is fitted on the first coupling rod 111c formed at a lower end of the first inner wheel 111.

The second inner wheel 112 having a ring shape includes a second hollow portion 112a defined at a central portion thereof, a second through-hole 112b formed through a central portion of a lower end thereof, and a plurality of second coupling rods 112c arranged along and protruding from a rim surface thereof.

The first coupling rods 111c of the first inner wheel 111 are inserted into second coupling-rod recesses 112d in the second inner wheel 112, and the second coupling rods 112c of the second inner wheel 112 are inserted into first coupling-rod recesses 111f. In this manner, the first inner wheel 111 and the second inner wheel 112 are fastened into two rotation grooves 122 in the outer wheel 120 and rotate along the inner circumferential surface of the outer wheel 120 while being in close contact with the outer wheel 120.

A circular gear part 123, which is formed corresponding to an edge of the inner circumferential surface of the first wheel body 121 of the outer wheel 120, is fitted into and coupled to the first wheel body 121 along the inner circumferential surface of the first wheel body 121.

The circular gear part 123 includes a gear body 124 having a ring shape in which a third hollow portion 126 is defined and gear recesses 125 continuously arranged along an inner circumferential surface of the gear body 124.

The frame 130 includes a frame body 131 having a hollow rod shape extending vertically and a motor coupling body 132 coupled to a lower end of the frame body 131.

The motor member 140 includes a motor 141 configured to provide rotational driving force, a circular protrusion 142 protruding from one end of the motor 141, and a rotating shaft 143 having a predetermined length and configured to rotate upon receiving the rotational driving force of the motor 141 through an interior of the circular protrusion 142.

The motor coupling body 132 has an inner empty space defined therein, and the motor 141 is inserted into the inner empty space. The circular protrusion 142 and the rotating shaft 143 protrude outward from the motor coupling body 132.

The spring member 150 includes a coil spring 151 wound to have predetermined elastic restoring force and compression resisting force and a spring pin 152 extending upward from one end of the coil spring 151. In the present invention, the coil spring 151 is described as an example. However, the present invention is not limited thereto, and various springs, such as an elastic spring or a compression spring, may be included.

When force is applied to the spring pin 152 in a leftward-rightward direction, tensile force resisting the applied force is generated in the spring member 150 in an opposite direction by the coil spring 151.

The spring member 150 is connected to the inner wheel 110 and to one side of the motor 141. The spring member 150 maintains an integral state of the inner wheel 110 and the outer wheel 120 at a predetermined angle during movement on flat ground. When the outer wheel 120 encounters an obstacle, rotation of the outer wheel 120 is stopped, and the rotating shaft 143 of the motor 141 is lifted onto the obstacle by rotation of the inner wheel 110. Accordingly, the spring member 150 applies tensile force to pull the inner wheel 110 upward.

The coil spring 151 is fitted on the circular protrusion 142 so as to surround a circumference of the circular protrusion 142, and the spring pin 152 extends vertically upward from the circular protrusion 142.

The first inner wheel 111 includes a cover portion 113 formed on a surface of the lower end that is opposite the rim surface on which the first coupling rods 111c are formed, the cover portion 113 having a smoothly curved surface formed at an apex thereof, and a protruding portion 114 extending by a predetermined length from the apex of the cover portion 113 toward the frame 130.

The cover portion 113 has a mountain-like shape in which a central region protrudes convexly and a height gradually decreases toward opposite sides.

The protruding portion 114 has a rod shape extending by a predetermined length from the apex of the cover portion 113.

The protruding portion 114 includes a coupling hole 115 formed in one surface thereof, into which the spring pin 152 extending vertically from the coil spring 151 is inserted. The spring pin 152 is inserted into and fastened in the coupling hole 115 in a vertically upward direction.

A gear assembly 160 includes a coupling portion 162 having an insertion recess 161 into which the rotating shaft 143 of the motor 141 is inserted and coupled, a driving gear 163 coupled to the coupling portion 162 and having a diameter greater than a diameter of the coupling portion 162, and a coupling rod 164 coupled to a surface of the driving gear 163 opposite the coupling portion 162 and extending by a predetermined length in a longitudinal direction.

The driving gear 163 has a ring shape and includes gear teeth formed along an outer circumferential surface thereof. The driving gear 163 is rotated in a state in which some of the gear teeth thereof are engaged with the gear recesses 125 of the gear body 124.

When the driving gear 163 is rotated, some of the gear teeth mesh with the gear recesses 125, and other gear teeth contact a lower surface of the cover portion 113.

The coupling rod 164 has a rod shape with a predetermined length, and a first bearing 170, a first washer 171, a second bearing 172, a second washer 173, a third bearing 174, a fourth bearing 175, and a third washer 176 are sequentially fitted on the coupling rod 164 in a horizontal direction.

The coupling rod 164 is sequentially inserted into and coupled to the first bearing 170, the first washer 171, the second bearing 172, the second washer 173, and the third bearing 174 through the first through-hole 111b in the first inner wheel 111, and is inserted into and coupled to the fourth bearing 175 and the third washer 176 through the second through-hole 112b in the second inner wheel 112.

When driving force of the motor 141 is transmitted to the rotating shaft 143, the driving gear 163 of the gear assembly 160, into which the rotating shaft 143 is inserted, is rotated along the gear recesses 125 of the circular gear part 123. Accordingly, the coupling rod 164 of the gear assembly 160 rotates the first inner wheel 111 and the second inner wheel 112. This is because the coupling rod 164 passes through the first through-hole 111b in the first inner wheel 111 and the second through-hole 112b in the second inner wheel 112 to be coupled to the first inner wheel 111 and the second inner wheel 112.

The inner wheel 110 is coupled to an inner side of the outer wheel 120 so as not to be separated from the outer wheel 120, and the motor 141 configured to provide driving force for rotating the wheel is connected to a lower portion of the inner wheel 110. When the outer wheel 120 encounters an obstacle, rotation of the outer wheel 120 is stopped, and the rotating shaft 143 of the motor 141 is lifted onto the obstacle.

During movement on flat ground, the outer wheel 120 is rotated by rotational force of the motor 141, and the inner wheel 110 is held stationary by the coupling rod 164 serving as a support shaft and by the weight of the inner wheel 110. When the outer wheel 120 encounters an obstacle, rotation of the outer wheel 120 is stopped, and the rotating shaft 143 of the motor 141 is lifted onto the obstacle as the inner wheel 110 is rotated by the rotating shaft 143 of the motor 141.

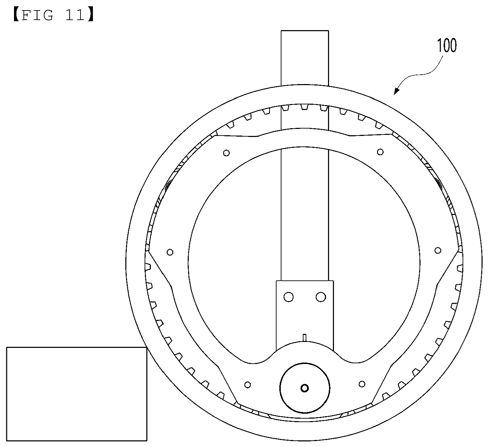

FIGs. 11 to 17 are views showing an operation state of the stair-climbing wheel according to the embodiment of the present invention.

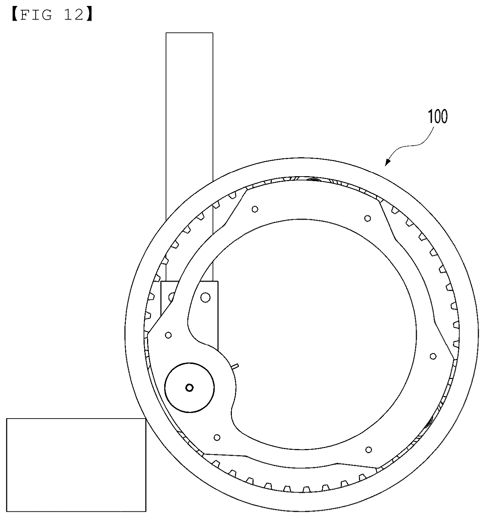

When the wheel 100 contacts an obstacle during movement (FIG. 11), rotation of the outer wheel 120 is stopped, and the rotating shaft 143 of the motor 141 is lifted onto the obstacle by driving of the motor 141 (FIG. 12).

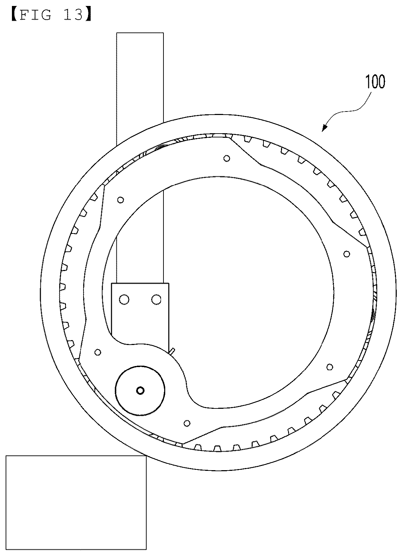

When the rotating shaft 143 of the motor 141 is lifted onto the obstacle, tensile force of the spring member 150 acts to pull the inner wheel 110 of the wheel 100 upward (FIG. 13).

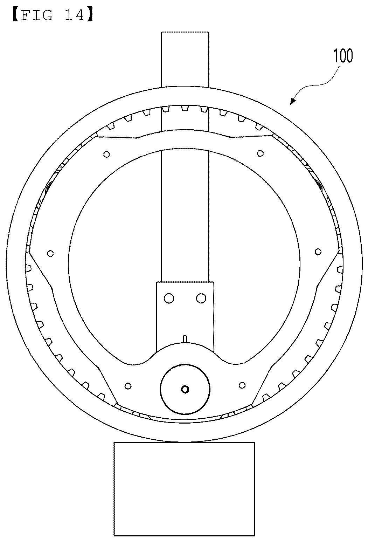

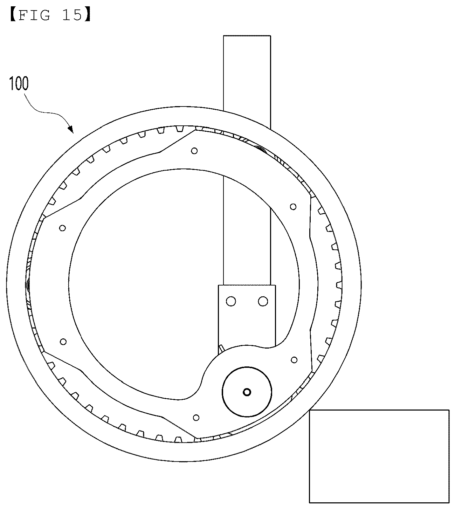

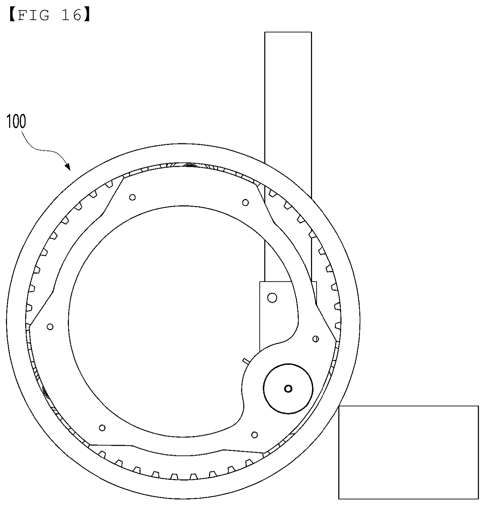

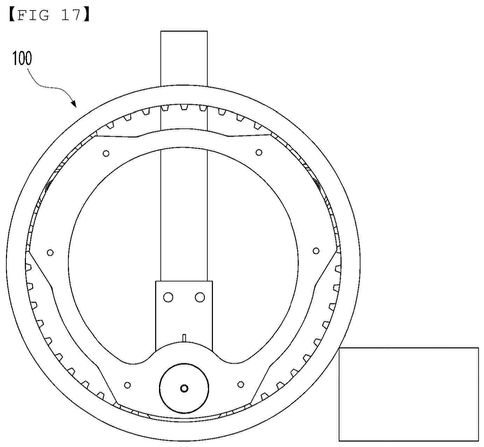

As the motor 141 continues to be driven, the wheel 100 moves downward due to the tensile force of the spring member 150 and gravity (FIGs. 14 and 15). Subsequently, as the motor 141 continues to be driven to rotate the inner wheel 110, an integral state of the inner wheel 110 and the outer wheel 120 is maintained at a predetermined angle by the tensile force of the spring member 150, and the wheel 100 moves on flat ground (FIGs. 16 and 17).

Although the present invention has been described above in detail with reference to a specific embodiment, the present invention is not limited to the above embodiment, and it is to be understood that various modifications and changes can be made by those skilled in the art without departing from the spirit and scope of the invention as defined by the appended claims.

### [Description of Reference Numerals]

100: wheel
110: inner wheel
120: outer wheel
130: frame
140: motor member
150: spring member

## Claims

1. A stair-climbing wheel comprising:
an outer wheel configured to move in contact with a ground surface;
an inner wheel coupled to an inner side of the outer wheel so as not to be separated from the outer wheel, the inner wheel being configured to be rotated by engagement between a driving gear coupled to a rotating shaft transmitting rotational force of a motor and a gear body of the outer wheel so that, when the outer wheel encounters an obstacle and rotation of the outer wheel is stopped, the rotating shaft of the motor is lifted onto the obstacle;
a motor member comprising the motor fixed to a motor coupling body provided at a lower end of a frame, the motor member being configured to transmit driving force to the outer wheel using an axis of the inner wheel as a rotational axis; and
a spring member comprising a spring coupled to the motor coupling body and having one end coupled to one side of the inner wheel, the spring member being configured to maintain an integral state of the inner wheel and the outer wheel at a predetermined angle during movement on flat ground and to apply tensile force to pull the inner wheel upward when rotation of the outer wheel is stopped by the obstacle and the rotating shaft is lifted onto the obstacle by rotation of the inner wheel,
wherein, during movement on flat ground, the outer wheel is rotated by rotational force of the motor while the inner wheel is held stationary, and when the outer wheel encounters an obstacle, rotation of the outer wheel is stopped, and the rotating shaft of the motor is lifted onto the obstacle as the inner wheel is rotated by the rotating shaft of the motor.

2. The stair-climbing wheel according to claim 1, wherein the outer wheel is coupled to the gear body,
wherein the gear body comprises gear recesses continuously arranged along an inner circumferential surface of the gear body,
wherein the inner wheel functions as a rotating shaft transmitting driving force of the motor to the outer wheel, and
wherein the spring is connected between one side of the inner wheel and the motor coupling body.

3. The stair-climbing wheel according to claim 1, further comprising a gear assembly comprising:
a coupling portion having an insertion recess, the rotating shaft transmitting driving force of the motor being inserted into and coupled to the insertion recess,
wherein the driving gear is coupled to the coupling portion and has a diameter greater than a diameter of the coupling portion; and
a coupling rod coupled to the driving gear and extending by a predetermined length in a longitudinal direction,
wherein the coupling rod has a rod shape with a predetermined length and is inserted into and coupled to a shaft provided at one side of a lower end of the inner wheel,
wherein the rotating shaft of the motor and the shaft provided at the one side of the lower end of the inner wheel are positioned on the same horizontal line, and
wherein, when the rotating shaft of the motor is rotated, the driving gear is rotated about the shaft provided at the one side of the lower end of the inner wheel and transmits driving force to a circular gear part engaged with the driving gear.

4. The stair-climbing wheel according to claim 1, wherein the outer wheel and the gear body are provided separately and coupled to each other or are formed integrally with each other, and
wherein the rotating shaft is connected to the motor to rotate the driving gear.

5. The stair-climbing wheel according to claim 1, wherein driving force transmission between the driving gear and the gear body is achieved by a gear-based transmission structure or a friction-based transmission structure, and
wherein the spring has a coil shape.

6. A stair-climbing wheel comprising:
an outer wheel configured to move in contact with a ground surface;
an inner wheel coupled to an inner side of the outer wheel so as not to be separated from the outer wheel, the inner wheel being configured to allow a motor providing driving force for rotating the wheel to be connected to a lower portion of the inner wheel and configured to lift a rotating shaft of the motor onto an obstacle when the outer wheel encounters the obstacle and rotation of the outer wheel is stopped,
wherein, during movement on flat ground, the outer wheel is rotated by rotational force of the motor while the inner wheel is held stationary, and when the outer wheel encounters the obstacle, rotation of the outer wheel is stopped, and the rotating shaft of the motor is lifted onto the obstacle as the inner wheel is rotated by the rotating shaft of the motor; and
a spring member connected to the inner wheel and to one side of the motor, the spring member being configured to maintain an integral state of the inner wheel and the outer wheel at a predetermined angle during movement on flat ground and to apply tensile force to pull the inner wheel upward when rotation of the outer wheel is stopped by the obstacle and the rotating shaft of the motor is lifted onto the obstacle by rotation of the inner wheel,
wherein the outer wheel comprises a first wheel body, having a ring shape having a first hollow portion defined therein, and one or more rotation grooves formed at predetermined intervals in an inner circumferential surface of the first wheel body,
wherein the inner wheel comprises first and second inner wheels having a ring shape having second hollow portions defined therein, and the first and second inner wheels are inserted into and rotated in the one or more rotation grooves, and
wherein a circular gear part, formed corresponding to an edge of the inner circumferential surface of the first wheel body of the outer wheel, is fitted into and coupled to the first wheel body along the inner circumferential surface of the first wheel body, and the circular gear part comprises a gear body, having a ring shape having a third hollow portion defined therein, and gear recesses continuously arranged along an inner circumferential surface of the gear body.

7. The stair-climbing wheel according to claim 6, further comprising a motor member comprising a circular protrusion protruding from one end of the motor and a rotating shaft having a predetermined length and configured to rotate upon receiving rotational driving force of the motor through an interior of the circular protrusion,
wherein the spring member comprises a spring and a spring pin extending upward from one end of the spring, and
wherein the spring of the spring member is fitted on the circular protrusion so as to surround a circumference of the circular protrusion, and the spring pin extends vertically upward from the circular protrusion.

8. The stair-climbing wheel according to claim 7, wherein the first inner wheel comprises a cover portion protruding outward from one surface of a lower end of the first inner wheel, the cover portion having a smoothly curved surface formed at an apex thereof such that a height gradually decreases toward opposite sides of the cover portion, and a protruding portion having a rod shape extending by a predetermined length from the apex of the cover portion, and
wherein the spring pin is inserted into and fastened in a coupling hole formed in the protruding portion in a vertically upward direction.

9. The stair-climbing wheel according to claim 6, further comprising a gear assembly comprising a coupling portion having an insertion recess, the rotating shaft of the motor being inserted into and coupled to the insertion recess, a driving gear coupled to the coupling portion and having a diameter greater than a diameter of the coupling portion, and a coupling rod coupled to the driving gear and extending by a predetermined length in a longitudinal direction,
wherein gear teeth of the driving gear are rotated in engagement with the gear recesses of the circular gear part.

10. The stair-climbing wheel according to claim 9, wherein the first inner wheel comprises a first through-hole formed through a central portion of a lower end of the first inner wheel,
wherein the second inner wheel comprises a second through-hole formed through a central portion of a lower end of the second inner wheel, and
wherein the coupling rod is sequentially inserted into and coupled to a first bearing, a second bearing, and a third bearing through the first through-hole in the first inner wheel, and is inserted into and coupled to a fourth bearing through the second through-hole in the second inner wheel.
